# FASCICULE DE BREVET EUROPEEN

(11) **EP 4 150 919 B1**
(45) Date de publication et mention de la délivrance du brevet: **18.03.2026**
(21) Numéro de dépôt: 21731255.2
(22) Date de dépôt: 11.05.2021
(51) Int. Cl.: H04R 1/02, B32B 17/00, B60J 1/00, G10K 11/178, B32B 3/06, B32B 3/08, B32B 3/26, B32B 17/10

(54) **VITRAGE AVEC EXCITATEUR AUDIO**
GLASSCHEIBE MIT AUDIOTREIBER
GLAZING WITH AUDIO EXCITER

(30) Priorité: 13.05.2020 FR 2004696
(43) Date de publication de la demande: 22.03.2023
(73) Titulaire: Saint-Gobain Sekurit France, 60150 Thourotte (FR)
(72) Inventeur: BOURE, Jean-Philippe, 60170 RIBECOURT-DRESLINCOURT (FR)
(74) Mandataire: Saint-Gobain Recherche
(86) Numéro de dépôt international: PCT/FR2021/050820
(87) Numéro de publication internationale: WO 2021/229180

(56) Documents cités:
- EP-A1- 0 723 897
- WO-A1-00/02417
- WO-A2-97/09842
- US-A1- 2017 280 216
- US-A1- 2018 317 001
- US-B1- 9 621 994

## Description

### Domaine de l'invention

La présente invention concerne un vitrage comprenant au moins un excitateur audio.

### Arrière-plan technique

Les excitateurs audio ou de surface permettent de générer du son à partir d'une paroi quelconque (plâtre, verre, bois..) pour des fonctions principalement audio mais également pour des applications particulières comme le contrôle actif du bruit ou des vibrations. La génération du son est provoquée par les vibrations de la structure sur laquelle est fixé l'excitateur via une connexion rigide.

Par exemple, le document WO 2013/164540 décrit un vitrage comprenant un transducteur piézoélectrique formé d'un élément piézoélectrique situé entre deux électrodes, pour des applications diverses telles que : pour nettoyer la poussière présente sur le vitrage, comme haut-parleur, comme microphone, comme générateur électrique ou pour atténuer ou amplifier des sons venant de l'extérieur ou l'intérieur d'un bâtiment.

Dans le secteur particulier de l'automobile, de nouvelles fonctionnalités audio se développent. Outre le divertissement traditionnel, le divertissement avancé, le contrôle actif du bruit, l'assistant personnel vocal, la conception sonore du moteur sont de nouvelles fonctionnalités rendues possibles aujourd'hui par les développements technologiques dans les transducteurs, les contrôleurs et le traitement du signal. Pour réaliser ces fonctions, les voitures d'aujourd'hui sont équipées d'un nombre croissant de capteurs et d' excitateurs de surface audios. US 9 621 994 B1 U montre un vitrage selon le préambule de la revendication 1.

Comparés aux haut-parleurs utilisés classiquement, les excitateurs audio peuvent être plus légers. De par leur faible encombrement, ils peuvent être intégrés dans les panneaux de porte, les différentes garnitures (telles que celles du toit ou des montants), et ainsi être positionnés dans l'habitacle au plus proche des oreilles des passagers. Ils peuvent s'ajouter aux haut-parleurs standards, voire s'y substituer.

Toutefois, l'intégration de tels équipements est soumise à une contrainte spécifique au domaine de l'automobile : celle-ci doit satisfaire aux normes (telles que les normes ECE R21 et ECE R26) et aux cahiers des charges des constructeurs automobiles pour la sécurité des passagers de l'habitacle automobile.

Il existe un besoin de mettre au point un système audio pouvant être plus léger et avec une bonne performance sonore.

### Résumé de l'invention

L'invention concerne en premier lieu un vitrage selon la revendication

Dans des modes de réalisation, la feuille de verre est en verre organique ou minéral ou l'ensemble vitré comprend au moins une feuille de verre qui est en verre organique ou minéral et qui comprend préférentiellement le trou.

Dans des modes de réalisation, l'ensemble vitré comprend au moins une feuille de verre, la feuille de verre comprenant le trou.

Dans des modes de réalisation, le vitrage comprend un ensemble vitré et l'ensemble vitré est un vitrage feuilleté comprenant au moins une première feuille de verre et une deuxième feuille de verre entre lesquelles est inséré au moins un film intercalaire en matière plastique viscoélastique, le film intercalaire en matière plastique viscoélastique étant de préférence en poly(butyral de vinyle) (PVB) ou en copolymère éthylène-acétate de vinyle, de préférence encore en PVB, en particulier en PVB standard, et de façon plus préférée en PVB acoustique.

Dans des modes de réalisation, l'au moins un trou est uniquement présent dans la première feuille de verre ou uniquement présent dans la première feuille de verre et dans l'au moins un film intercalaire en matière plastique viscoélastique.

Dans des modes de réalisation, l'au moins un trou est non-traversant.

Dans des modes de réalisation, l'embase comprend une face inférieure et l'au moins un trou comprend une surface intérieure inférieure, la face inférieure de l'embase prenant appui sur la surface intérieure inférieure de l'au moins un trou.

Dans des modes de réalisation, l'au moins un trou est traversant.

Dans des modes de réalisation, l'au moins un trou et l'embase insérée dans l'au moins un trou ont une section transversale substantiellement identique.

Dans des modes de réalisation, lequel l'embase comprend une partie inférieure et une partie supérieure, la partie supérieure faisant saillie par rapport à la partie inférieure.

Dans des modes de réalisation, la partie supérieure de l'embase a une face inférieure, ladite face inférieure recouvrant en partie la feuille de verre ou l'ensemble vitré.

Dans des modes de réalisation, l'embase est fixée dans l'au moins un trou au moyen de colle et/ou par serrage de l'embase dans l'au moins un trou.

Dans des modes de réalisation, l'embase comprend une partie d'accroche, l'excitateur audio étant fixé sur ladite partie d'accroche.

Dans des modes de réalisation, le vitrage est un vitrage de véhicule, de préférence d'automobile.

Dans des modes de réalisation, le vitrage est un vitrage de bâtiment, tel qu'un vitrage de fenêtre ou de façade de bâtiment.

L'invention concerne également un procédé de fabrication d'un vitrage tel que décrit ci-dessus, comprenant les étapes suivantes :
- la fourniture d'une feuille de verre ou d'un ensemble vitré et d'au moins un excitateur audio monté sur une embase ;
- le perçage d'au moins un trou dans la feuille de verre ou l'ensemble vitré ; et
- l'insertion de l'embase dans l'au moins un trou de la feuille de verre ou de l'ensemble vitré.

L'invention concerne également un procédé de fabrication d'un vitrage tel que décrit ci-dessus, comprenant les étapes suivantes :
- la fourniture d'une feuille de verre ou d'un ensemble vitré, d'au moins un excitateur audio et d'au moins une embase ;
- le perçage d'au moins un trou dans la feuille de verre ou l'ensemble vitré ;
- l'insertion de l'au moins une embase dans l'au moins un trou de la feuille de verre ou de l'ensemble vitré ; et
- le montage de l'au moins un excitateur audio sur l'au moins une embase.

La présente invention permet de répondre au besoin exprimé ci-dessus. Elle fournit plus particulièrement un vitrage avec un système audio léger et compact et offrant de bonnes performances sonores. En outre, le vitrage selon l'invention est adapté à une utilisation aussi bien dans un véhicule, permettant de respecter la sécurité des passagers du véhicule dans lequel il est placé, que dans un bâtiment.

Cela est accompli grâce à l'assemblage spécifique d'un excitateur audio et d'une feuille de verre ou d'un ensemble vitré au moyen d'un trou présent dans la feuille de verre ou l'ensemble vitré. L'utilisation d'un vitrage en tant que système audio permet généralement d'offrir à l'excitateur audio une grande surface capable d'entrer en vibration pour produire un son, comme c'est usuellement le cas des vitrages automobiles ou des fenêtres ou façades vitrées de bâtiments. Cela permet ainsi une performance sonore optimale.

Dans les modes de réalisation particuliers dans lesquels le vitrage selon l'invention est un vitrage pour véhicule, le vitrage est typiquement situé proche des oreilles des passagers du véhicule, ce qui permet une meilleure expérience auditive pour les passagers. En outre, l'assemblage de l'excitateur audio sur la feuille de verre ou l'ensemble vitré selon l'invention peut permettre de satisfaire aux contraintes imposées par les normes vis-à-vis de la sécurité des passagers du véhicule.

### Brève description des figures

[Fig.1] représente une vue en coupe schématique d'un exemple de vitrage selon l'invention.
[Fig.2] représente une vue en coupe schématique d'un autre exemple de vitrage selon l'invention.
[Fig.3] représente une vue en coupe schématique d'un autre exemple de vitrage selon l'invention.
[Fig.4] représente une vue en coupe schématique d'un autre exemple de vitrage selon l'invention.
[Fig.5] représente une vue en coupe schématique d'un autre exemple de vitrage selon l'invention.
[Fig.6] représente une vue en coupe schématique d'un autre exemple de vitrage selon l'invention.
[Fig.7] représente une vue en coupe schématique d'un autre exemple de vitrage selon l'invention.
[Fig.8] représente une vue en coupe schématique d'un autre exemple de vitrage selon l'invention.
[Fig.9] représente une vue en coupe schématique d'un autre exemple de vitrage selon l'invention.
[Fig.10] représente une vue en coupe schématique d'un autre exemple de vitrage selon l'invention.
[Fig.11] représente une vue en coupe schématique d'un autre exemple de vitrage selon l'invention.
[Fig.12] représente une vue en coupe schématique d'une embase utilisable dans un vitrage selon l'invention, avant son insertion dans le trou de la feuille de verre ou de l'ensemble vitré du vitrage.
[Fig.13] représente une vue en coupe schématique de l'embase représentée dans la figure 12, une fois insérée dans le trou de la feuille de verre ou de l'ensemble vitré du vitrage.
[Fig.14] représente les réponses acoustiques du vitrage 1 (courbe grise) et du vitrage 2 (courbe noire) tels que décrits dans l'exemple 1. La fréquence, en Hz, figure en abscisse et le niveau de pression acoustique, en dB, figure en ordonnée.

### Description détaillée

L'invention est maintenant décrite plus en détail et de façon non limitative dans la description qui suit.

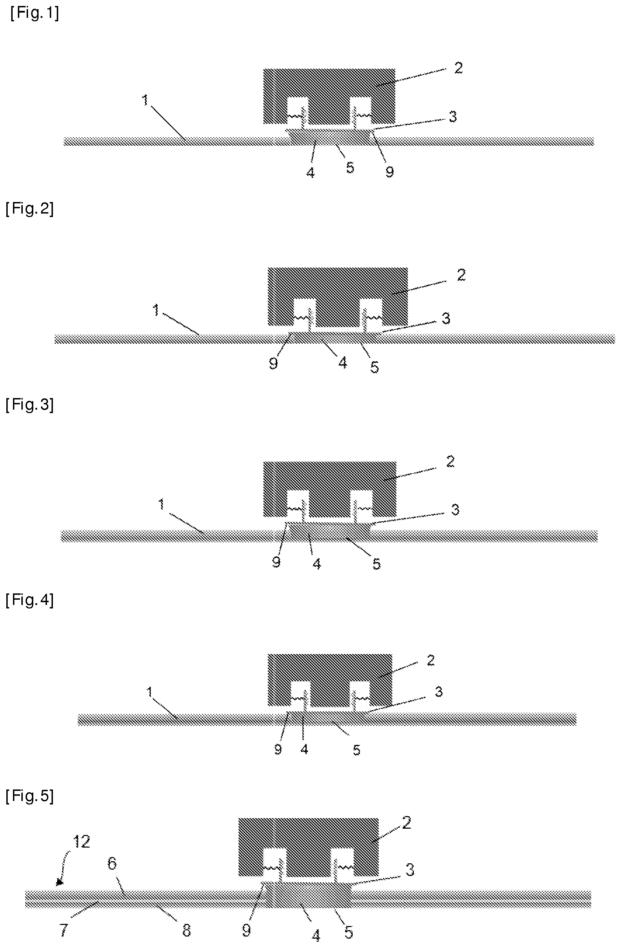

Dans le présent texte, le vitrage selon l'invention est décrit en considérant qu'il est orienté selon une direction horizontale, comme représenté dans les **figures 1** à **11** : les termes « *inférieur* » ou « *supérieur* » sont donc employés par référence à cette configuration. Cependant, le vitrage selon l'invention peut bien entendu avoir toute orientation possible (par exemple une orientation verticale).

### Vitrage

L'invention concerne un vitrage comprenant au moins un excitateur audio.

Au sens de la présente invention, un « *vitrage* » désigne toute structure comprenant au moins une feuille de verre ou un ensemble vitré. Ainsi, le vitrage peut par exemple comprendre une feuille de verre simple ou bien un ensemble vitré constitué d'un vitrage feuilleté constitué d'au moins deux feuilles de verre entre lesquelles est disposé un intercalaire en matière plastique viscoélastique. Par « *ensemble vitré* » on entend un élément vitré multicouche dont au moins une couche est une feuille de verre.

La feuille de verre ou l'ensemble vitré peut être transparent(e) ou opaque, par exemple lorsque la feuille de verre ou l'ensemble vitré est recouvert(e) d'un revêtement opaque. Le revêtement opaque peut être une peinture ou un émail, par exemple de couleur noire. La feuille de verre ou l'ensemble vitré peut comprendre une partie vitrée transparente et une partie vitrée opaque, par exemple la partie vitrée opaque peut entourer la partie vitrée transparente. En alternative, la feuille de verre, ou l'ensemble vitré, peut être teinté(e) dans l'épaisseur sur tout ou partie de sa surface.

La feuille de verre est en verre organique ou minéral. Elle peut être en verre trempé.

Avantageusement, le vitrage selon l'invention comprend un ensemble vitré. L'ensemble vitré comprend au moins une feuille en verre. Le verre peut être du verre organique ou minéral. Le verre peut être trempé. L'ensemble vitré est de préférence un vitrage feuilleté. Par « *vitrage feuilleté* », on entend au moins deux feuilles de verre (appelées dans le présent texte première feuille de verre (ou également feuille de verre supérieure) et deuxième feuille de verre (ou également feuille de verre inférieure), respectivement) entre lesquelles est inséré au moins un film intercalaire généralement en matière plastique viscoélastique. L'utilisation d'un vitrage feuilleté, par rapport à une feuille de verre simple, résulte en une réponse plus plate en raison de l'amortissement conféré par le film intercalaire, ce qui améliore la réponse du système audio, en particulier en ce qui concerne les basses fréquences. Le film intercalaire en matière plastique viscoélastique peut comprendre une ou plusieurs couches, d'un polymère viscoélastique tel que le poly(butyral de vinyle) (PVB) ou un copolymère éthylène-acétate de vinyle (EVA), plus préférentiellement le PVB. Le film intercalaire est de préférence en PVB standard ou, de façon encore plus préférée, en PVB acoustique (tel que le PVB acoustique mono-couche ou tri-couche). Le PVB acoustique est généralement constitué de trois couches : deux couches externes en PVB standard et une couche interne en PVB additionné de plastifiant de façon à la rendre moins rigide que les couches externes. L'utilisation, dans un vitrage feuilleté, d'un PVB acoustique, par rapport à un PVB standard, permet d'encore améliorer la restitution en basses fréquence et de réduire les problèmes vibratoires.

Le vitrage selon l'invention peut avoir toute forme possible. Dans certains modes de réalisation, le vitrage est de forme quadrilatérale, en particulier de forme rectangulaire ou essentiellement rectangulaire, ou de forme trapézoïdale ou essentiellement trapézoïdale. Dans d'autres modes de réalisation, le vitrage est de forme circulaire, ou essentiellement circulaire, ou elliptique, ou essentiellement elliptique. Les bords du vitrage peuvent être droits ou essentiellement droits (ils peuvent présenter une légère courbure) et/ou être courbes. En particulier, la feuille de verre ou l'ensemble vitré du vitrage peut avoir les formes mentionnées ci-dessus.

La feuille de verre ou l'ensemble vitré comporte deux surfaces principales opposées l'une à l'autre correspondant aux surfaces de la feuille de verre ou de l'ensemble vitré ayant les plus grandes superficies.

De manière avantageuse, la feuille de verre ou l'ensemble vitré a une épaisseur (entre ses deux surfaces principales) supérieure ou égale à 1,6 mm (et pouvant atteindre dans certains modes de réalisation plusieurs dizaines de millimètres), par exemple une épaisseur de 1,6 à 24 mm, telle qu'une épaisseur de 1,6 à 6 mm, ou de 6 à 10 mm, ou de 10 à 24 mm.

La feuille de verre ou l'ensemble vitré du vitrage selon l'invention comprend au moins un trou. De préférence, l'ensemble vitré comprend au moins une feuille de verre, notamment une feuille de verre en verre organique ou minéral, la feuille de verre comprenant le trou.

Le trou peut avoir toute forme appropriée. Le trou peut avoir une section transversale (correspondant à la section du trou dans un plan parallèle au plan principal de la feuille de verre ou de l'ensemble vitré) de forme circulaire ou essentiellement circulaire. Alternativement, le trou peut avoir une section transversale de forme rectangulaire ou essentiellement rectangulaire. De préférence, le trou a une forme de prisme ou est cylindrique.

La section transversale du trou peut avoir un diamètre de 5 à 50 mm, par exemple de 10 à 20 mm. De manière alternative, la section transversale du trou peut avoir une longueur de 9 à 50 mm, par exemple de 20 à 30 mm, et/ou une largeur de 5 à 50 mm, par exemple de 5 à 15 mm.

Le trou peut être traversant, c'est-à-dire qu'il s'étend au travers de toute l'épaisseur de la feuille de verre ou de l'ensemble vitré.

Alternativement, le trou peut-être non-traversant. Dans ces modes de réalisations, le trou est présent sur une surface principale de la feuille de verre ou de l'ensemble vitré mais ne débouche pas sur la surface principale opposée de la feuille de verre ou de l'ensemble vitré. Le trou a alors une épaisseur (ou profondeur) inférieure à l'épaisseur de la feuille de verre ou de l'ensemble vitré. Le trou comprend une surface intérieure inférieure (ou fond) (correspondant à la surface intérieure du trou la plus éloignée de l'ouverture du trou dans la surface de la feuille de verre ou de l'ensemble vitré) et une ou plusieurs surfaces intérieures latérales (correspondant à la ou aux surfaces intérieuresdu trou reliant sa surface intérieure inférieure à son ouverture dans la surface de la feuille de verre ou de l'ensemble vitré).

L'épaisseur du trou non-traversant (de sa surface intérieure inférieure à son ouverture dans la surface de la feuille de verre ou de l'ensemble vitré) vaut avantageusement de 20 à 90 % l'épaisseur de la feuille de verre ou de l'ensemble vitré, de préférence de 30 à 80 %l'épaisseur de la feuille de verre ou de l'ensemble vitré. Dans des modes de réalisation, l'épaisseur du trou peut valoir de 5 à 10 %, ou de 10 à 20 %, 20 à 30 %, ou de 30 à 40 %, ou de 40 à 50 %, ou de 50 à 60 %, ou de 60 à 70, ou de 70 à 80 %, ou de 80 à 90 %, ou de 90 à 95 %celle de la feuille de verre ou de l'ensemble vitré.

Lorsque le vitrage comprend un ensemble vitré qui est un vitrage feuilleté, le trou non-traversant peut en particulier être présent dans la première feuille de verre, plus particulièrement être uniquement présent dans la première feuille de verre, encore plus particulièrement être uniquement présent dans la première feuille de verre et traverser la première feuille de verre sur toute son épaisseur. Dans ce dernier cas, la surface intérieure inférieure du trou est confondue avec la surface supérieure du film intercalaire. Alternativement, le trou peut être présent dans la première feuille de verre et dans l'au moins un film intercalaire, plus particulièrement être uniquement présent dans la première feuille de verre et dans l'au moins un film intercalaire, encore plus particulièrement être uniquement présent dans la première feuille de verre et dans l'au moins un film intercalaire et traverser la première feuille de verre et le film intercalaire sur toute leur épaisseur. Dans ce dernier cas, la surface intérieure inférieure du trou est confondue avec la surface supérieure de la deuxième feuille de verre.

Dans des modes de réalisations, la feuille de verre ou l'ensemble vitré peut comprendre au moins deux trous, ou au moins 3, ou au moins 4, ou au moins 5, ou au moins 10, ou au moins 15 trous, par exemple de 1 à 2, ou de 2 à 3, ou de 3 à 4, ou de 4 à 5, ou de 5 à de 5 à 6, ou de 6 à 7, ou de 7 à 8, ou de 8 à 9, ou de 9 à 10, ou de 10 à 12, ou de 12 à 15, ou de 15 à 20 trous. Lorsque la feuille de verre ou l'ensemble vitré comprend plusieurs trous, les caractéristiques décrites ci-dessus peuvent s'appliquer à au moins un des trous, à chaque trou indépendamment, ou à l'ensemble des trous.

Le vitrage selon l'invention comprend au moins un excitateur audio. A ce titre, il forme un système audio, c'est-à-dire un système capable d'émettre des sons. L'excitateur audio est monté sur une embase insérée dans un trou de la feuille de verre ou de l'ensemble vitré. Dans des modes de réalisation, le vitrage peut comprendre un unique excitateur audio, ou au moins deux excitateurs audio, ou au moins 3, ou au moins 4, ou au moins 5, ou au moins 10, ou au moins 15 excitateurs audio, par exemple de 1 à 2, ou de 2 à 3, ou de 3 à 4, ou de 4 à 5, ou de 5 à de 5 à 6, ou de 6 à 7, ou de 7 à 8, ou de 8 à 9, ou de 9 à 10, ou de 10 à 12, ou de 12 à 15, ou de 15 à 20 excitateurs audio. De manière particulièrement avantageuse, le vitrage comprend un nombre identique d'excitateurs audio et de trous dans la feuille de verre ou l'ensemble vitré, l'embase de chaque excitateur audio étant insérée dans un trou de la feuille de verre ou de l'ensemble vitré. Lorsque le vitrage comprend plusieurs excitateurs audio, les caractéristiques décrites ci-dessous peuvent s'appliquer à au moins un des excitateurs audio, à chaque excitateur audio indépendamment, ou à l'ensemble des excitateurs audio.

L'excitateur audio (ou actionneur, ou transducteur) selon l'invention peut être tout excitateur transformant un courant électrique en énergie mécanique permettant de faire vibrer une surface, utilisée comme une membrane, pour créer une onde acoustique. Dans le cadre de la présente invention, la surface que l'excitateur fait vibrer comprend ou est la feuille de verre ou l'ensemble vitré.

L'excitateur audio peut être un excitateur audio piézoélectrique ou un excitateur audio électrodynamique (ou excitateur à inertie). De manière particulièrement préférée, l'excitateur audio est un excitateur électrodynamique. En effet, les excitateurs piézoélectriques requièrent une très haute tension et comprennent généralement des composants électroniques coûteux et lourds.

Avantageusement, l'excitateur audio a une masse inférieure à 300 g, de préférence une masse de 100 à 200 g. L'excitateur audio peut avoir une masse de 30 à 50 g, ou de 50 à 80 g, ou de 80 à 100 g, ou de 100 à 120 g, ou de 120 à 150 g, ou de 150 à 180 g, ou de 180 à 200 g, ou de 200 à 300 g.

L'excitateur audio a avantageusement un diamètre de 10 à 150 mm, par exemple de 30 à 100 mm. Alternativement, l'excitateur audio peut avoir une longueur de 30 à 200 mm, par exemple de 50 à 150 mm, et/ou une largeur de 10 à 100 mm, par exemple de 20 à 60 mm. L'excitateur audio peut avoir une profondeur de 10 à 50 mm, par exemple de 12 à 30 mm.

L'excitateur audio peut être configuré pour générer des hautes fréquences et/ou des moyennes fréquences et/ou des basses fréquences. Par *« hautes fréquences »,* on entend les ondes sonores de fréquence supérieure à 2000 Hz. Par *« moyennes fréquences »,* on entend les ondes sonores de fréquence allant de 300 à 2000 Hz. Par « *basses fréquences »,* on entend les ondes sonores de fréquence inférieure à 300 Hz. L'excitateur audio peut comprendre un filtre de signal pour limiter la bande de fréquences générées, par exemple à des fréquences hautes et/ou moyennes et/ou basses. Par exemple, le filtre de signal peut limiter la bande de fréquences émises à une plage de fréquences, cette plage de fréquences ayant une borne inférieure qui est supérieure ou égale à 2000 Hz, ou qui est supérieure ou égale à 300 Hz, ou qui est supérieure ou égale à 150 Hz, ou cette plage de fréquences ayant une borne supérieure qui est inférieure ou égale à 300 Hz.

L'excitateur audio peut être placé à tout endroit sur la feuille de verre ou sur l'ensemble vitré. En particulier, il peut être positionné dans une zone périphérique de la feuille de verre ou de l'ensemble vitré. Par *« zone périphérique de la feuille de verre »* ou *« zone périphérique de l'ensemble vitré »,* on entend une partie de la feuille de verre, ou respectivement de l'ensemble vitré, adjacente aux bords de la feuille de verre ou de l'ensemble vitré, respectivement (c'est-à-dire aux bords délimitant la feuille de verre ou l'ensemble vitré). Dans des modes de réalisation, la zone périphérique de la feuille de verre ou de l'ensemble vitré est la zone de la feuille de verre ou de l'ensemble vitré adjacente aux bords de la feuille de verre ou de l'ensemble vitré et de largeur (c'est-à-dire selon une direction orthogonale au bord de la feuille de verre ou de l'ensemble vitré, dans le plan de la feuille de verre ou de l'ensemble vitré) inférieure ou égale à 30 cm, ou inférieure ou égale à 25 cm, ou inférieure ou égale à 20 cm, ou inférieure ou égale à 15 mm.

La feuille de verre ou l'ensemble vitré peut comprendre une ou plusieurs ouvertures pour le passage des fils d'alimentation de l'excitateur audio, en plus de l'au moins un trou dans lequel l'embase est insérée.

L'excitateur audio est monté sur une embase, l'embase étant insérée dans le trou de la feuille de verre ou de l'ensemble vitré. L'embase peut être insérée dans le trou dans sa totalité, ou, de préférence, seule une partie de l'embase est insérée dans le trou.

L'embase peut avoir toute forme possible. De manière avantageuse, l'embase est un prisme ou un cylindre. Ainsi, l'embase peut avoir une section transversale (selon un plan parallèle au plan principal de la feuille de verre ou de l'ensemble vitré) de forme circulaire ou rectangulaire Elle peut être pleine ou creuse. L'embase possède une ou plusieurs faces latérales (lorsque l'embase est creuse, ces faces latérales désignent les faces latérales extérieures de l'embase). L'embase peut posséder une face inférieure.

De manière avantageuse, le trou dans la feuille de verre ou l'ensemble vitré et l'embase (et plus particulièrement la partie de l'embase insérée dans ledit trou) ont une section transversale substantiellement identique (étant entendu que la section transversale de l'embase est inférieure ou peut être rendue inférieure à celle du trou, pour permettre l'emboîement de l'embase dans le trou). De manière préférée, la partie de l'embase insérée dans le trou a une forme (en trois dimensions) substantiellement identique à celle du trou.

L'insertion de l'embase dans le trou de la feuille de verre ou de l'ensemble vitré doit être de telle sorte à permettre le transfert desvibrations de l'excitateur audio à la feuille de verre ou à l'ensemble vitré. En d'autres termes, elle doit assurer au moins un point de contact (direct ou indirect) entre l'embase sur laquelle est monté l'excitateur audio et la feuille de verre ou l'ensemble vitré. De préférence, au moins un point de contact (direct ou indirect) est présent entre la ou les faces latérales de l'embase et la ou les surfaces intérieures latérales du trou. De manière avantageuse, l'embase est fixée dans le trou au moyen de colle et/ou par serrage de l'embase dans le trou. En particulier, la ou les faces latérales de l'embase peuvent être collées à la ou aux surfaces intérieures latérales du trou et/ ou la ou les faces latérales de l'embase peuvent être serrées contre la ou les surfaces intérieures latérales du trou. Des exemples de colles utilisables pour l'invention sont les colles structurales mono- ou multi-composants, par exemple de type époxy, méthacrylate, polyuréthane, acrylique, vinylique, ou une combinaison de celles-ci.

Dans les modes de réalisation dans lesquels l'embase est fixée par serrage, l'embase comprend de préférence, lorsqu'elle n'est pas insérée dans le trou de la feuille de verre ou de l'ensemble vitré, au moins une partie dont la section transversale est supérieure à la section transversale du trou. Cette partie de l'embase présente une flexibilité ou une déformabilité permettant, par l'exertion d'une pression, de diminuer la section transversale de ladite partie jusqu'à la rendre inférieure à celle du trou, ladite partie étant configurée pour retrouver sa forme initiale à l'arrêt de l'exertion de la pression. Ainsi, lorsque l'embase est insérée dans le trou de la feuille de verre ou de l'ensemble vitré, la ou les faces latérales de l'embase sont soumises à une contrainte de la part des surfaces intérieures latérales du trou qui les maintient en contact avec ces dernières. De préférence, l'embase est creuse, de préférence encore, des ouvertures sont présentes dans la ou les faces latérales de l'embase. Ces ouvertures permettent de créer un espace dans lequel la partie flexible/déformable de l'embase pourra être déplacée lors de l'exertion d'une pression.

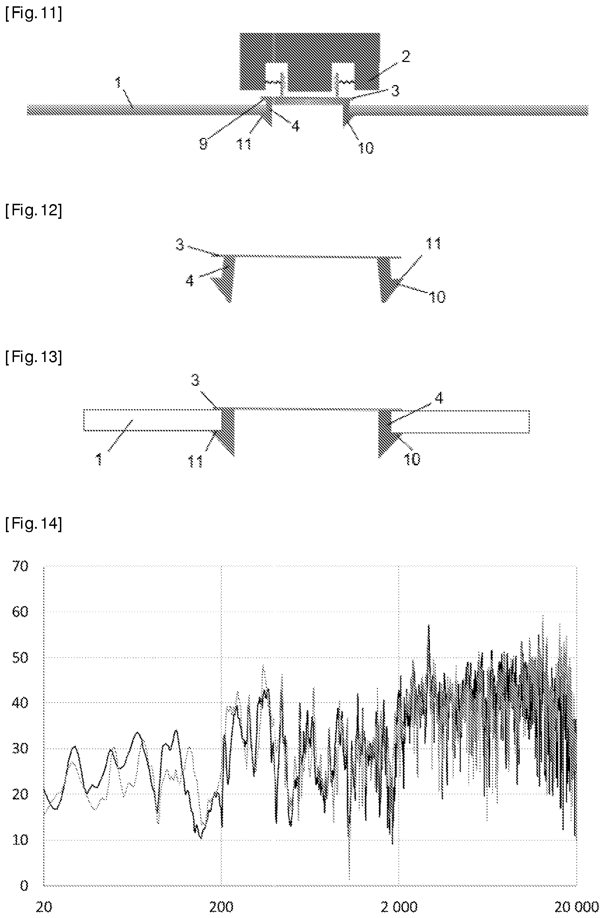

Lorsque le trou dans la feuille de verre ou l'ensemble vitré est traversant, l'embase peut être fixée dans le trou par serrage à l'aide de clips. Un exemple d'une embase utilisable pour de tels modes de réalisation est montré en **figure 12** (représentant l'embase avant son insertion dans le trou de la feuille de verre ou l'ensemble vitré et en **figure 13** (représentant l'embase après son insertion dans le trou de la feuille de verre 1 (qui peut alternativement être un ensemble vitré)). En référence à ces figures, l'embase peut comprendre une partie supérieure 3 et une partie inférieure 4, qui peuvent être telles que décrites ci-dessous. La partie inférieure 4 est de préférence creuse et des ouvertures sont de préférence présentes dans sa face latérale. Elle est flexible de manière à ce que les dimensions de sa section transversale puissent être réduites, de manière réversible, par l'exertion d'une pression, comme montré sur la **figure 13** (la pression étant exercée par les surfaces intérieures latérales du trou dans la feuille de verre 1, ou dans l'ensemble vitré). La partie inférieure 4 peut comprendre une partie proéminente 10, formant avantageusement un clip. La partie proéminente 10 comprend de préférence une face supérieure 11 destinée à être en contact, directement ou indirectement, avec la surface principale de la feuille de verre ou de l'ensemble vitré opposée à la surface de la feuille de verre ou de l'ensemble vitré du côté de laquelle est présent l'excitateur audio.

Lorsque le trou dans la feuille de verre ou l'ensemble vitré est non-traversant, la face inférieure de l'embase prend de préférence appui sur la surface intérieure inférieure du trou. En d'autrestermes, la face inférieure de l'embase est en contact, direct ou indirect, avec la surface intérieure inférieure du trou. La face inférieure de l'embase peut être fixée sur la feuille de verre ou sur l'ensemble vitré (sur la surface intérieure inférieure du trou), par exemple au moyen de colle, en particulier par une colle telle que décrite ci-dessus. Cela permet de créer une zone de contact entre l'embase et la feuille de verre ou l'ensemble vitré supplémentaire pour transmettre les vibrations de l'excitateur audio à la feuille de verre ou à l'ensemble vitré.

De préférence, l'embase comprend une partie inférieure et une partie supérieure. De préférence encore, la partie supérieure de l'embase fait saillie par rapport à la partie inférieure de l'embase (de préférence selon une direction orthogonale au plan principal de la feuille de verre ou de l'ensemble vitré). En d'autres termes, la partie supérieure dépasse de la partie inférieure (de préférence dans un plan parallèle au plan principal de la feuille de verre ou de l'ensemble vitré), de préférence sur la totalité du pourtour de la partie inférieure de l'embase. De préférence la partie inférieure de l'embase est insérée dans le trou de la feuille de verre ou de l'ensemble vitré (en partie ou en totalité). Elle peut être fixée dans le trou par collage et/ou par serrage, comme décrit ci-dessus, en particulier entre sa ou ses faces latérales et la ou les surfaces intérieures latérales du trou.

La partie inférieure de l'embase peut avoir toute forme adaptée, telle qu'une forme de prisme ou de cylindre. Elle peut par exemple avoir une section transversale (selon un plan parallèle au plan principal de la feuille de verre ou de l'ensemble vitré) circulaire ou rectangulaire. De manière plus préférée, le trou dans la feuille de verre ou l'ensemble vitré et la partie inférieure de l'embase insérée dansledit trou ont une section transversale substantiellement identique. La partie inférieure de l'embase peut être pleine ou creuse.

La partie inférieure de l'embase peut avoir une face inférieure (qui correspond à la face inférieure de l'embase) et a une ou plusieurs faces latérales. La face inférieure de la partie inférieure de l'embase peut prendre appui sur la surface intérieure inférieure du trou lorsque le trou est non-traversant, comme cela est décrit ci-dessus en relation avec la face inférieure de l'embase.

La partie supérieure de l'embase peut avoir n'importe quelle forme, et peut notamment avoir une section transversale (selon un plan parallèle au plan principal de la feuille de verre ou de l'ensemble vitré) de forme circulaire ou rectangulaire. La partie supérieure de l'embase peut avoir une section transversale de diamètre de 10 à 55 mm, par exemple de 15 à 35 mm. Dans d'autres modesde réalisation, la partie supérieure de l'embase peut avoir une section transversale de longueur de 10 à 80 mm, par exemple de 30 à 60 mm, et/ou de largeur de 10 à 80mm, par exemple de 30 à 60 mm. La partie supérieure de l'embase peut avoir une épaisseur de 1 à 10 mm, par exemple de 2 à 6 mm.

De préférence, la partie inférieure de l'embase est centrée sur la partie supérieure de l'embase.

La partie supérieure de l'embase comprend une face inférieure (correspondant à la surface inférieure de la partie de la partie supérieure de l'embase qui fait saillie par rapport à la partie inférieure de l'embase).

La face inférieure de la partie supérieure de l'embase peut recouvrir en partie la feuille de verre ou l'ensemble vitré, c'est-à-dire que la face inférieure de la partie supérieure de l'embase est en contact, direct ou indirect, avec la feuille de verre ou l'ensemble vitré. La face inférieure de la partie supérieure de l'embase peut être fixée sur la feuille de verre ou sur l'ensemble vitré, par exemple au moyen de colle, en particulier par une colle telle que décrite ci-dessus. Cel a permet de créer une zone de contact entre l'embase et la feuille de verre ou l'ensemble vitré supplémentaire pour transmettre les vibrations de l'excitateur audio à la feuille de verre ou à l'ensemble vitré.

Alternativement, la face inférieure de la partie supérieure de l'embase peut ne pas recouvrir la feuille de verre ou l'ensemble vitré, c'est-à-dire que la face inférieure de la partie supérieure de l'embase n'est pas en contact avec la feuille de verre ou l'ensemble vitré. Cela peut par exemple être le cas lorsque la feuille de verre ou l'ensemble vitré est incurvée alors que la face inférieure de la partie supérieure de l'embase est plane.

Des modes de réalisation de l'invention sont représentés dans les **figures 1** à **11****.** Ces modes de réalisations illustrent l'invention sans la limiter.

En référence à la **figure 1****,** dans des modes de réalisation, le vitrage comprend une feuille de verre 1 comprenant un trou traversant. Le vitrage comprend également un excitateur audio 2 monté sur une embase comprenant une partie supérieure 3 et une partie inférieure 4. La partie inférieure 4 de l'embase est insérée dans le trou de la feuille de verre 1 et sa surface latérale est couplée avec la surface intérieure latérale du trou, par exemple par collage ou par serrage. De préférence, la partie inférieure 4 de l'embase est insérée dans le trou sur toute la profondeur du trou, et de manière plus préférée la face inférieure 5 de la partie inférieure 4 de l'embase est coplanaire ou essentiellement coplanaire avec la surface principale inférieure de la feuille de verre 1 (qui est la surface opposée à la surface de la feuille de verre 1 du côté de laquelle sont présents la partie supérieure 3 de l'embase et l'excitateur audio 2). La face inférieure 9 de la partie supérieure 3 de l'embase n'est pas en contact avec la feuille de verre 1.

En référence à la **figure 2**, dans des modes de réalisation, le vitrage comprend une feuille de verre 1 comprenant un trou traversant. Le vitrage comprend également un excitateur audio 2 monté sur une embase comprenant une partie supérieure 3 et une partie inférieure 4. La partie inférieure 4 de l'embase est insérée dans le trou de la feuille de verre 1 et sa surface latérale est couplée avec la surface intérieure latérale du trou, par exemple par collage ou par serrage. De préférence, la partie inférieure 4 de l'embase est insérée dans le trou sur toute la profondeur du trou, et de manière plus préférée la face inférieure 5 de la partie inférieure 4 de l'embase est coplanaire ou essentiellement coplanaire avec la surface principale inférieure de la feuille de verre 1. La face inférieure 9 de la partie supérieure 3 de l'embase est couplée avec la surface supérieure de la feuille de verre 1 (qui est la surface de la feuille de verre 1 du côté de laquelle sont présents la partie supérieure 3 de l'embase et l'excitateur audio 2), par exemple par collage.

En référence à la **figure 3**, dans des modes de réalisation, le vitrage comprend une feuille de verre 1 comprenant un trou non-traversant. Le vitrage comprend également un excitateur audio 2 monté sur une embase comprenant une partie supérieure 3 et une partie inférieure 4. La partie inférieure 4 de l'embase est insérée dans le trou de la feuille de verre 1, sur toute la profondeur du trou, et sa surface latérale est couplée avec la surface intérieure latérale du trou, par exemple par collage ou par serrage. La face inférieure 5 de la partie inférieure 4 de l'embase est couplée avec la surface intérieure inférieure du trou, par exemple par collage. La face inférieure 9 de la partie supérieure 3 de l'embase n'est pas en contact avec la feuille de verre 1.

En référence à la **figure 4****,** dans des modes de réalisation, le vitrage comprend une feuille de verre 1 comprenant un trou non-traversant. Le vitrage comprend également un excitateur audio 2 monté sur une embase comprenant une partie supérieure 3 et une partie inférieure 4. La partie inférieure 4 de l'embase est insérée dans le trou de la feuille de verre 1, sur toute la profondeur du trou, et sa surface latérale est couplée avec la surface intérieure latérale du trou, par exemple par collage ou par serrage. La face inférieure 5 de la partie inférieure 4 de l'embase est couplée avec la surface intérieure inférieure du trou, par exemple par collage. La face inférieure 9 de la partie supérieure 3 de l'embase est couplée avec la surface supérieure de la feuille de verre 1, par exemple par collage.

En référence à la **figure 5****,** dans des modes de réalisation, le vitrage comprend un ensemble vitré 12 formé d'un vitrage feuilleté comprenant une première feuille de verre (ou feuille de verre supérieure) 6, un film intercalaire 7 et une deuxième feuille de verre (ou feuille de verre inférieure) 8. L'ensemble vitré 12 comprend un trou traversant. Le vitrage comprend également un excitateur audio 2 monté sur une embase comprenant une partie supérieure 3 et une partie inférieure 4. La partie inférieure 4 de l'embase est insérée dans le trou de l'ensemble vitré 12, sur toute la profondeur du trou, et sa surface latérale est couplée avec la surface intérieure latérale du trou, par exemple par collage ou par serrage. De préférence, la partie inférieure 4 de l'embase est insérée dans le trou sur toute la profondeur du trou, et de manière plus préférée la face inférieure 5 de la partie inférieure 4 de l'embase est coplanaire ou essentiellement coplanaire avec la surface principale inférieure de l'ensemble vitré 12 (qui est la surface opposée à la surface de l'ensemble vitré 12 du côté de laquelle sont présents la partie supérieure 3 de l'embase et l'excitateur audio 2). La face inférieure 9 de la partie supérieure 3 de l'embase n'est pas en contact avec l'ensemble vitré 12.

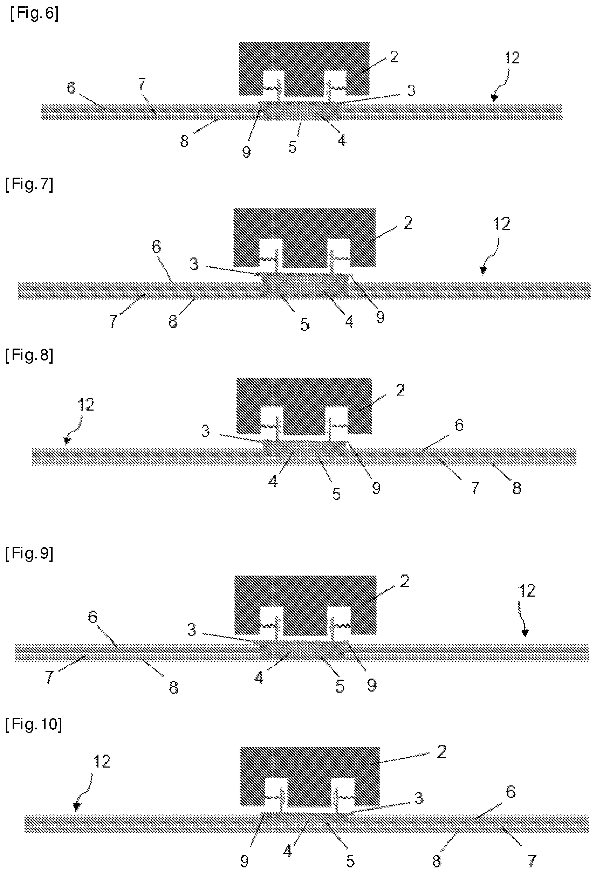

En référence à la **figure 6****,** dans des modes de réalisation, le vitrage comprend un ensemble vitré 12 formé d'une vitrage feuilleté comprenant une première feuille de verre 6, un film intercalaire 7 et une deuxième feuille de verre 8. L'ensemble vitré 12 comprend un trou traversant. Le vitrage comprend également un excitateur audio 2 monté sur une embase comprenant une partie supérieure 3 et une partie inférieure 4. La partie inférieure 4 de l'embase est insérée dans le trou de l'ensemble vitré12 et sa surface latérale est couplée avec la surface intérieure latérale du trou, par exemple par collage ou par serrage. De préférence, la partie inférieure 4 de l'embase est insérée dans le trou sur toute la profondeur du trou, et de manière plus préférée la face inférieure 5 de la partie inférieure 4 de l'embase est coplanaire ou essentiellement coplanaire avec la surface principale inférieure de l'ensemble vitré 12. La face inférieure 9 de la partie supérieure 3 de l'embase est couplée avec la surface supérieure de l'ensemble vitré 12 (qui est la surface de l'ensemble vitré 12 du côté de laquelle sont présents la partie supérieure 3 de l'embase et l'excitateur audio 2), par exemple par collage.

En référence à la **figure 7****,** dans des modes de réalisation, le vitrage comprend un ensemble vitré 12 formé d'un vitrage feuilleté comprenant une première feuille de verre 6, un film intercalaire 7 et une deuxième feuille de verre 8. L'ensemble vitré 12 comprend un trou non-traversant s'étendant à travers la première feuille de verre 6 et le film intercalaire 7, jusqu'à la surface supérieure de la deuxième feuille de verre 8. Le vitrage comprend également un excitateur audio 2 monté sur une embase comprenant une partie supérieure 3 et une partie inférieure 4. La partie inférieure 4 de l'embase est insérée dans le trou de l'ensemble vitré 12, sur toute la profondeur du trou, et sa surface latérale est couplée avec la surface intérieure latérale du trou, par exemple par collage ou par serrage. La face inférieure 5 de la partie inférieure 4 de l'embase est couplée avec la surface intérieure inférieure du trou, par exemple par collage. La face inférieure 9 de la partie supérieure 3 de l'embase n'est pas en contact avec l'ensemble vitré 12.

En référence à la **figure 8**, dans des modes de réalisation, le vitrage comprend un ensemble vitré 12 formé d'un vitrage feuilleté comprenant une première feuille de verre 6, un film intercalaire 7 et une deuxième feuille de verre 8. L'ensemble vitré 12 comprend un trou non-traversant s'étendant à travers la première feuille de verre 6, jusqu'à la surface supérieure du film intercalaire 7. Le vitrage comprend également un excitateur audio 2 monté sur une embase comprenant une partie supérieure 3 et une partie inférieure 4. La partie inférieure 4 de l'embase est insérée dans le trou de l'ensemble vitré 12, sur toute la profondeur du trou, et sa surface latérale est couplée avec la surface intérieure latérale du trou, par exemple par collage ou par serrage. La face inférieure 5 de la partie inférieure 4 de l'embase est couplée avec la surface intérieure inférieure du trou, par exemple par collage. La face inférieure 9 de la partie supérieure 3 de l'embase n'est pas en contact avec l'ensemble vitré 12.

En référence à la **figure 9****,** dans des modes de réalisation, le vitrage comprend un ensemble vitré 12 formé d'un vitrage feuilleté comprenant une première feuille de verre 6, un film intercalaire 7 et une deuxième feuille de verre 8. L'ensemble vitré 12 comprend un trou non-traversant s'étendant à travers la première feuille de verre 6 et le film intercalaire 7, jusqu'à la surface supérieure de la deuxième feuille de verre 8. Le vitrage comprend également un excitateur audio 2 monté sur une embase comprenant une partie supérieure 3 et une partie inférieure 4. La partie inférieure 4 de l'embase est insérée dans le trou de l'ensemble vitré 12, sur toute la profondeur du trou, et sa surface latérale est couplée avec la surface intérieure latérale du trou, par exemple par collage ou par serrage. La face inférieure 5 de la partie inférieure 4 de l'embase est couplée avec la surface intérieure inférieure du trou, par exemple par collage. La face inférieure 9 de la partie supérieure 3 de l'embase est couplée avec la surface supérieure de l'ensemble vitré 12, par exemple par collage.

En référence à la **figure 10****,** dans des modes de réalisation, le vitrage comprend un ensemble vitré 12 formé d'un vitrage feuilleté comprenant une première feuille de verre 6, un film intercalaire 7 et une deuxième feuille de verre 8. L'ensemble vitré 12 comprend un trou non-traversant s'étendant à travers la première feuille de verre 6, jusqu'à la surface supérieure du film intercalaire 7. Le vitrage comprend également un excitateur audio 2 monté sur une embase comprenant une partie supérieure 3 et une partie inférieure 4. La partie inférieure 4 de l'embase est insérée dans le trou de l'ensemble vitré 12, sur toute la profondeur du trou, et sa surface latérale est couplée avec la surface intérieure latérale du trou, par exemple par collage ou par serrage. La face inférieure 5 de la partie inférieure 4 de l'embase est couplée avec la surface intérieure inférieure du trou, par exemple par collage. La face inférieure 9 de la partie supérieure 3 de l'embase est couplée avec la surface supérieure de l'ensemble vitré 12, par exemple par collage.

En référence à la **figure 11****,** dans des modes de réalisation, le vitrage comprend une feuille de verre 1 comprenant un trou traversant. Le vitrage comprend également un excitateur audio 2 monté sur une embase comprenant une partie supérieure 3 et une partie inférieure 4. La partie inférieure 4 de l'embase est insérée dans le trou de la feuille de verre 1 et sa surface latérale est couplée avec la surface intérieure latérale du trou par serrage. La partie inférieure 4 comprend une partie proéminente 10 qui comprend une face supérieure 11 sur laquelle la feuille de verre 1 prend appui (par sa surface principale inférieure). La face inférieure 9 de la partie supérieure 3 de l'embase n'est pas en contact avec la feuille de verre 1. Dans d'autre modes de réalisation, la face inférieure 9 de la partie supérieure 3 de l'embase peut être en contact avec la surface supérieure de la feuille de verre 1. Dans d'autres modes de réalisation encore, le vitrage peut comprendre, au lieu de la feuille de verre 1 un ensemble vitré, par exemple formé d'un vitrage feuilleté.

L'excitateur audio peut être monté sur l'embase de façon fixe ou amovible. En particulier, l'embase peut comprendre une partie d'accroche sur laquelle l'excitateur audio est fixé, de préférence de manière amovible. Cela présente l'avantage que l'excitateur peut être facilement retiré et changé, par exemple en cas de panne. L'excitateur audio peut être fixé sur la partie d'accroche de l'embase par vissage. En particulier, la partie d'accroche peut comprendre ou consister en une ou plusieurs pièces (ou tiges) filetées faisant saillie de l'embase (ces pièces filetées ayant un axe principal orienté de préférence selon une direction orthogonale au plan principal de la feuille de verre ou de l'ensemble vitré). Dans ces modes de réalisation, l'excitateur audio comprend un ou plusieurs trous taraudés capables de se visser sur la ou les pièces filetées de l'embase. Alternativement, ou additionnellement, la partie d'accroche peut comprendre ou consister en un ou plusieurs trous taraudés présents dans l'embase (ces trous taraudés ayant un axe principal orienté de préférence selon une direction orthogonale au plan principal de la feuille de verre ou de l'ensemble vitré). Dans ces modes de réalisation, l'excitateur audio comprend une ou plusieurs pièces filetées capables de se visser dans le ou les trous taraudés de l'embase. Alternativement, ou additionnellement, à un mode de fixation par vissage, l'excitateur audio peut être fixé sur la partie d'accroche de l'embase par emboîtement. Dans ces modes de réalisation, la partie d'accroche de l'embase et l'excitateur audio comprennent chacun une ou plusieurs empreintes configurées pour s'emboîter les unes avec les autres. Par exemple, la partie d'accroche peut être une partie de l'embase comprenant au moins une encoche (par exemple rectangulaire), de préférence au moins deux encoches, sur sa ou ses faces latérales, ou une partie de l'embase comprenant au moins un clip, de préférence au moins deux clips, sur sa ou ses faces latérales, ou une partie de l'embase comprenant au moins une encoche, pouvant avoir toute forme adaptée, sur sa face supérieure.

De manière avantageuse, l'embase comprend ou est en matériau métallique, en matériau thermoplastique ou une combinaison de ceux-ci. Des exemples de matériaux métalliques adaptés à l'embase selon l'invention sont l'aluminium et/ou l'acier inoxydable. Des exemples de matériaux thermoplastiques sont les polyphthalamides, tels que ceux commercialisés sous le nom commercial Grivory^{®}, le poly(chlorure de vinyle) (PVC) et/ou le poly(téréphtalate d'éthylène) (PET). De manière préférée, l'embase ne comprend pas de matériau magnétique, en particulier si l'excitateur audio est un excitateur électrodynamique, de manière à ne pas interférer avec le circuit magnétique de l'excitateur.

En particulier, les éventuelles partie inférieure de l'embase, partie supérieure de l'embase et partie d'accroche peuvent indépendamment comprendre ou être en les matériaux mentionnés ci-dessus.

### Procédé de fabrication

L'invention a également pour objet un procédé de fabrication d'un vitrage tel que décrit ci-dessus

Selon une première variante, le procédé de fabrication peut comprendre :
- la fourniture d'une feuille de verre ou d'un ensemble vitré et d'au moins un excitateur audio monté sur une embase ;
- le perçage d'au moins un trou dans la feuille de verre ou l'ensemble vitré ; et
- l'insertion de l'embase dans l'au moins un trou de la feuille de verre ou de l'ensemble vitré.

Le perçage du trou dans la feuille de verre ou dans l'ensemble vitré peut être effectué au moyen d'un foret, d'une fraise, d'un trépan diamant ou par jet d'eau haute pression.

Avant son insertion dans le trou, de la colle peut être déposée sur l'embase, en particulier sur sa ou ses faces latérales. Alternativement ou additionnellement, de la colle peut être déposée sur la ou les surfaces intérieures latérales du trou.

Lorsque le trou est non-traversant et que la face inférieure de l'embase est destinée à reposer sur la surface intérieure inférieure du trou, de la colle peut être déposée sur la face inférieure de l'embase. Alternativement ou additionnellement, de la colle peut être déposée sur la surface intérieure inférieure du trou.

Lorsque l'embase comprend une partie supérieure destinée à recouvrir la feuille de verre ou l'ensemble vitré, de la colle peut être déposée sur la face inférieure de la partie supérieure de l'embase. Alternativement ou additionnellement, de la colle peut être déposée sur la surface de la feuille de verre ou de l'ensemble vitré destinée à être recouverte par la partie supérieure de l'embase.

L'éventuel encollage de l'embase, son positionnement et son insertion dans le trou de la feuille de verre ou de l'ensemble vitré peuvent indépendamment être effectués par des moyens industriels de ligne de production bien connus de l'homme du métier, tels que des machines robotisées, ou par des moyens manuels. Dans certains modes de réalisation, l'embase peut être insérée dans le trou de manière à être serrée dans le trou. Par exemple, une pression peut être exercée sur une partie flexible ou déformable de l'embase de manière à réduire ses dimensions extérieures avant d'insérer l'embase dans le trou de la feuille de verre ou de l'ensemble vitré.

Selon une deuxième variante, le procédé de fabrication peut comprendre :
- la fourniture d'une feuille de verre ou d'un ensemble vitré, d'au moins un excitateur audio et d'au moins une embase ;
- le perçage d'au moins un trou dans la feuille de verre ou l'ensemble vitré ;
- l'insertion de l'au moins une embase dans l'au moins un trou de la feuille de verre ou de l'ensemble vitré ; et
- le montage de l'au moins un excitateur audio sur l'au moins une embase.

Le perçage de la feuille de verre ou de l'ensemble vitré, l'éventuel collage de l'embase et l'insertion de l'embase dans le trou peuvent être tels que décrit ci-dessus en relation avec la première variante de procédé.

Dans cette variante, l'embase comprend une partie d'accroche destinée à recevoir l'excitateur audio. Le montage de l'excitateur audio sur l'embase peut être réalisé par vissage et/ou emboîtement de l'excitateur audio sur la partie d'accroche.

### Utilisations

Le vitrage selon l'invention peut être utilisé dans toute application utilisant des vitrages.

En particulier, le vitrage selon l'invention peut être un vitrage de véhicule. Le véhicule peut être tout type de véhicule comprenant au moins un vitrage. De préférence, il s'agit d'un véhicule à moteur de transport terrestre, bien que la présente invention soit également applicable à des vitrages de véhicules aéronautiques, tels que les hélicoptères, avions et navires. Plus préférentiellement, le véhicule est un véhicule automobile (voiture). Alternativement, le véhicule peut être un camion, une camionnette, ou un bus ou car.

Le vitrage selon l'invention peut être tout vitrage de véhicule. En particulier, il peut s'agir d'un pare-brise, de tout vitrage latéral, en particulier un vitrage de portière, d'une lunette arrière et/ ou d'un vitrage de toit.

Lorsque le vitrage est destiné à être orienté verticalement ou de manière essentiellement verticale dans le véhicule (en particulier lorsqu'il est destiné à être un pare-brise, un vitrage latéral ou une lunette arrière), l'excitateur est avantageusement situé sur une zone périphérique de la feuille de verre ou de l'ensemble vitré adjacente au bord inférieur de la feuille de verre ou de l'ensemble vitré (c'est-à-dire le bord destiné à être du côté du bas du véhicule).

Lorsque le vitrage est un pare-brise, l'excitateur audio peut, additionnellement ou alternativement, être situé sur une zone périphérique de la feuille de verre ou de l'ensemble vitré adjacente au bord supérieur de la feuille de verre ou de l'ensemble vitré (c'est-à-dire le bord destiné à être du côté du haut du véhicule), de préférence dans une zone centrale de cette zone périphérique supérieure (par exemple dans une zone de la zone périphérique supérieure s'étendant sur une longueur de 30 cm, de préférence de 20 cm, selon une direction parallèle au bord supérieur du pare-brise, de part et d'autre du centre du bord supérieur). De préférence encore, lorsque le pare-brise comprend un rétroviseur intérieur ou est destiné à en comprendre un, l'excitateur audio est situé proche des fixations du rétroviseur intérieur du pare-brise (par exemple dans une zone du pare-brise circulaire de rayon inférieure ou égal à 15 cm dont le centre est constitué par les fixations du rétroviseur intérieur ou par l'emplacement destiné à recevoir les fixations du rétroviseur intérieur).

L'invention peut être destinée à équiper un véhicule, de préférence un véhicule automobile. Dans ces modes de réalisation, l'au moins un excitateur audio est destiné à être localisé dans l'habitacle du véhicule. En d'autres termes, il est destiné à être situé sur la surface intérieure de la feuille de verre ou de l'ensemble vitré.

L'excitateur audio peut être destiné à être recouvert ou entouré d'une garniture intérieure de véhicule, de manière à être non ou peu visible des passagers du véhicule.

De préférence, un véhicule peut comprendre au moins deux excitateurs audios. Par exemple, le véhicule peut comprendre un vitrage selon l'invention comprenant au moins deux excitateurs audios, peut comprendre au moins deux vitrages selon l'invention comprenant chacun au moins un excitateur audio, ou peut comprendre au moins un vitrage selon l'invention comprenant au moins un excitateur audio et au moins un autre excitateur audio, situé dans un vitrage du véhicule ou dans tout autre endroit du véhicule (tel que dans un montant, dans une portière, dans le tableau de bord, ou dans le toit).

Le vitrage selon l'invention peut alternativement être un vitrage de bâtiment. Le vitrage peut être destiné à faire l'interface entre l'extérieur et l'intérieur du bâtiment, et peut par exemple être un vitrage de fenêtre ou de façade. Alternativement, le vitrage peut être destiné à être placé à l'intérieur du bâtiment.

### Exemple

L'exemple suivant illustre l'invention sans la limiter.

### Exemple 1

Deux vitrages latéraux d'automobiles comprenant une feuille de verre de verre trempé d'épaisseur 3,5 mm et un excitateur audio électrodynamique de puissance nominale 30 W, de diamètre 46 mm et de masse 130 g, ont été fabriqués.

Le vitrage 1 est un vitrage selon l'invention. Une embase comprenant une partie inférieure et une partie supérieure a été fabriquée par impression 3D. La partie inférieure de l'embase a été insérée dans un trou traversant, percé dans la feuille de verre, et collée à l'aide d'une colle époxy. La face inférieure de la partie supérieure de l'embase ne recouvre pas la feuille de verre, c'est-à-dire que la face inférieure de la partie supérieure de l'embase n'est pas en contact avec la feuille de verre.

Le vitrage 2 est un vitrage comparatif. Dans ce vitrage, l'embase de série de l'excitateur, équipée d'un ruban adhésif double face, a été utilisée. La partie inférieure de l'embase a été fixé sur la feuille de verre au moyen du ruban adhésif double face placé entre la surface inférieure de la partie inférieure de l'embase et la feuille de verre.

Les réponses acoustiques des deux vitrages ont été mesurées pour 1 W à 1 m par un microphone de mesure classe 1.

Les résultats sont montrés en **figure 14**.

On observe que le vitrage 1 selon l'invention fournit une réponse acoustique similaire à celle du vitrage 2 dans lequel l'embase de l'excitateur est fixée par un ruban adhésif double face sur la feuille de verre. L'invention fournit donc une solution efficace pour intégrer un excitateur audio dans un vitrage.

## Revendications

1. Vitrage comprenant :
- une feuille de verre (1) ou un ensemble vitré (12) comprenant au moins un trou, l'ensemble vitré étant un élément vitré multicouche dont au moins une couche est une feuille de verre, et
- au moins un excitateur audio (2) monté sur une embase ;
**caractérisé en ce que** l'embase est insérée dans l'au moins un trou de la feuille de verre (1) ou de l'ensemble vitré (12) de sorte à permettre le transfert des vibrations de l'excitateur audio (2) à la feuille de verre (1) ou l'ensemble vitré (12) pour produire une onde acoustique.

2. Vitrage selon la revendication 1, dans lequel la feuille de verre (1) est en verre organique ou minérale ou l'ensemble vitré (12) comprend au moins une feuille de verre qui est en verre organique ou minéral et qui comprend le trou.

3. Vitrage selon la revendication 1 ou 2, comprenant un ensemble vitré (12) et dans lequel l'ensemble vitré (12) est un vitrage feuilleté comprenant au moins une première feuille de verre (6) et une deuxième feuille de verre (8) entre lesquelles est inséré au moins un film intercalaire (7) en matière plastique viscoélastique, le film intercalaire en matière plastique viscoélastique étant de préférence en poly(butyral de vinyle) (PVB) ou en copolymère éthylène-acétate de vinyle, de préférence encore en PVB, en particulier en PVB standard, et de façon plus préférée en PVB acoustique.

4. Vitrage selon la revendication 3, dans lequel l'au moins un trou est uniquement présent dans la première feuille de verre (6) ou uniquement présent dans la première feuille de verre (6) et dans l'au moins un film intercalaire (7) en matière plastique viscoélastique.

5. Vitrage selon l'une des revendications 1 à 4, dans lequel l'au moins un trou est non-traversant.

6. Vitrage selon la revendication 5, dans lequel l'embase comprend une face inférieure (5) et l'au moins un trou comprend une surface intérieure inférieure, la face inférieure (5) de l'embase prenant appui sur la surface intérieure inférieure de l'au moins un trou.

7. Vitrage selon l'une des revendications 1 à 3, dans lequel l'au moins un trou est traversant.

8. Vitrage selon l'une des revendications 1 à 7, dans lequel l'au moins un trou et l'embase insérée dans l'au moins un trou ont une section transversale substantiellement identique.

9. Vitrage selon l'une des revendications 1 à 8, dans lequel l'embase comprend une partie inférieure (4) et une partie supérieure (3), la partie supérieure (3) faisant saillie par rapport à la partie inférieure (4).

10. Vitrage selon la revendication 9, dans lequel la partie supérieure (3) de l'embase a une face inférieure (9), ladite face inférieure (9) recouvrant en partie la feuille de verre (1) ou l'ensemble vitré (12).

11. Vitrage selon l'une des revendications 1 à 10, dans lequel l'embase est fixée dans l'au moins un trou au moyen de colle et/ou par serrage de l'embase dans l'au moins un trou.

12. Vitrage selon l'une des revendications 1 à 11, dans lequel l'embase comprend une partie d'accroche, l'excitateur audio étant fixé sur ladite partie d'accroche.

13. Vitrage selon l'une des revendications 1 à 12, étant un vitrage de véhicule, de préférence d'automobile.

14. Vitrage selon l'une des revendications 1 à 12, étant un vitrage de bâtiment, tel qu'un vitrage de fenêtre ou de façade de bâtiment.

15. Procédé de fabrication d'un vitrage selon l'une des revendications 1 à 14, comprenant les étapes suivantes :
- la fourniture d'une feuille de verre (1) ou d'un ensemble vitré (12) et d'au moins un excitateur audio (2) monté sur une embase ;
- le perçage d'au moins un trou dans la feuille de verre (1) ou l'ensemble vitré (12) ; et
- l'insertion de l'embase dans l'au moins un trou de la feuille de verre (1) ou de l'ensemble vitré (12).

16. Procédé de fabrication d'un vitrage selon l'une des revendications 1 à 14, comprenant les étapes suivantes :
- la fourniture d'une feuille de verre (1) ou d'un ensemble vitré (12), d'au moins un excitateur audio (2) et d'au moins une embase ;
- le perçage d'au moins un trou dans la feuille de verre (1) ou l'ensemble vitré (12) ;
- l'insertion de l'au moins une embase dans l'au moins un trou de la feuille de verre (1) ou de l'ensemble vitré (12) ; et
- le montage de l'au moins un excitateur audio (2) sur l'au moins une embase.

## Patentansprüche

1. Verglasung, umfassend:
- eine Glasscheibe (1) oder eine verglaste Einheit (12), umfassend mindestens ein Loch, wobei die verglaste Einheit ein mehrschichtiges verglastes Element ist, von dem mindestens eine Schicht eine Glasscheibe ist, und
- mindestens einen Audio-Exciter (2), der auf einer Befestigungsfläche montiert ist;
**dadurch gekennzeichnet, dass** die Befestigungsfläche in das mindestens eine Loch der Glasscheibe (1) oder der verglasten Einheit (12) eingesetzt ist, um die Übertragung der Schwingungen des Audio-Exciters (2) auf die Glasscheibe (1) oder die verglaste Einheit (12) zu ermöglichen, um eine Schallwelle zu erzeugen.

2. Verglasung nach Anspruch 1, wobei die Glasscheibe (1) aus organischem oder mineralischem Glas besteht oder die verglaste Einheit (12) mindestens eine Glasscheibe umfasst, die aus organischem oder mineralischem Glas besteht.

3. Verglasung nach Anspruch 1 oder 2, umfassend eine verglaste Einheit (12), und wobei die verglaste Einheit (12) eine Verbundverglasung ist, umfassend mindestens eine erste Glasscheibe (6) und eine zweite Glasscheibe (8), zwischen denen mindestens eine Zwischenfolie (7) aus viskoelastischem Kunststoff eingesetzt ist, wobei die Zwischenfolie aus viskoelastischem Kunststoff vorzugsweise aus Poly(Vinylbutyral) (PVB) oder aus Ethylenvinylacetat-Copolymer, vorzugsweise außerdem aus PVB, insbesondere aus Standard-PVB, und mehr bevorzugt aus akustischem PVB besteht.

4. Verglasung nach Anspruch 3, wobei das mindestens eine Loch einzig in der ersten Glasscheibe (6) vorhanden ist oder einzig in der ersten Glasscheibe (6) und in der mindestens einen Zwischenfolie (7) aus viskoelastischem Kunststoff vorhanden ist.

5. Verglasung nach einem der Ansprüche 1 bis 4, wobei das mindestens eine Loch nicht durchgehend ist.

6. Verglasung nach Anspruch 5, wobei die Befestigungsfläche eine untere Fläche (5) umfasst und das mindestens eine Loch eine untere Innenfläche umfasst, wobei die untere Fläche (5) der Befestigungsfläche auf der unteren Innenfläche des mindestens einen Lochs aufliegt.

7. Verglasung nach einem der Ansprüche 1 bis 3, wobei das mindestens eine Loch durchgehend ist.

8. Verglasung nach einem der Ansprüche 1 bis 7, wobei das mindestens eine Loch und die Befestigungsfläche, die in das mindestens eine Loch eingesetzt ist, einen im Wesentlichen identischen Querschnitt vorweisen.

9. Verglasung nach einem der Ansprüche 1 bis 8, wobei die Befestigungsfläche einen unteren Teil (4) und einen oberen Teil (3) umfasst, wobei der obere Teil (3) gegenüber dem unteren Teil (4) vorsteht.

10. Verglasung nach Anspruch 9, wobei der obere Teil (3) der Befestigungsfläche eine untere Fläche (9) aufweist, wobei die untere Fläche (9) die Glasscheibe (1) oder die verglaste Einheit (12) teilweise überdeckt.

11. Verglasung nach einem der Ansprüche 1 bis 10, wobei die Befestigungsfläche in dem mindestens einen Loch mittels Klebstoff und/oder durch Einspannen der Befestigungsfläche in dem mindestens einen Loch fixiert ist.

12. Verglasung nach einem der Ansprüche 1 bis 11, wobei die Befestigungsfläche einen Ankopplungsteil umfasst, wobei der Audio-Exciter an dem Ankopplungsteil fixiert ist.

13. Verglasung nach einem der Ansprüche 1 bis 12, die eine Fahrzeugverglasung, vorzugsweise eines Automobils ist.

14. Verglasung nach einem der Ansprüche 1 bis 12, die eine Gebäudeverglasung, wie eine Fenster- oder Gebäudefassadenverglasung ist.

15. Verfahren zum Herstellen einer Verglasung nach einem der Ansprüche 1 bis 14, umfassend die folgenden Schritte:
- Bereitstellen einer Glasscheibe (1) oder einer verglasten Einheit (12) und mindestens eines Audio-Exciters (2), der auf einer Befestigungsfläche montiert ist;
- Bohren mindestens eines Lochs in die Glasscheibe (1) oder die verglaste Einheit (12); und
- Einsetzen der Befestigungsfläche in das mindestens eine Loch der Glasscheibe (1) oder der verglasten Einheit (12).

16. Verfahren zum Herstellen einer Verglasung nach einem der Ansprüche 1 bis 14, umfassend die folgenden Schritte:
- Bereitstellen einer Glasscheibe (1) oder einer verglasten Einheit (12), mindestens eines Audio-Exciters (2) und mindestens einer Befestigungsfläche;
- Bohren von mindestens einem Loch in die Glasscheibe (1) oder die verglaste Einheit (12);
- Einsetzen der mindestens einen Befestigungsfläche in das mindestens eine Loch der Glasscheibe (1) oder der verglasten Einheit (12); und
- Montieren des mindestens einen Audio-Exciters (2) auf der mindestens einen Befestigungsfläche.

## Claims

1. A glazing comprising:
- a glass sheet (1) or a glazed assembly (12) comprising at least one hole, the glazed assembly being a multilayer glazed element of which at least one layer is a glass sheet, and
- at least one audio exciter (2) mounted on a mounting;
**caracterized in that** the mounting is inserted into the at least one hole of the glass sheet (1) or of the glazed assembly (12) so as to enable transmission of vibrations generated by the audio exciter (2) to said glass sheet (1) or to said glazed assembly (12), for the purpose of generating a sound wave.

2. The glazing according to claim 1, wherein the glass sheet (1) is made of organic or mineral glass or the glazed assembly (12) comprises at least one glass sheet which is made of organic or mineral glass and which comprises the hole.

3. The glazing according to claim 1 or 2, comprising a glazed assembly (12) and wherein the glazed assembly (12) is a laminated glazing comprising at least one first glass sheet (6) and a second glass sheet (8) between which at least one interlayer film (7) made of viscoelastic plastic material is inserted, the interlayer film made of viscoelastic plastic material preferably being made of polyvinyl butyral (PVB) or of ethylene vinyl acetate copolymer, preferably still of PVB, in particular of standard PVB, and more preferably of acoustic PVB.

4. The glazing according to claim 3, wherein the at least one hole is only present in the first glass sheet (6) or only present in the first glass sheet (6) and in the at least one interlayer film (7) made of viscoelastic plastic material.

5. The glazing according to one of claims 1 to 4, wherein the at least one hole is a blind hole.

6. The glazing according to claim 5, wherein the mounting comprises a lower face (5) and the at least one hole comprises a lower inner surface, the lower face (5) of the mounting bearing against the lower inner surface of the at least one hole.

7. The glazing according to one of claims 1 to 3, wherein the at least one hole is a through-hole.

8. The glazing according to one of claims 1 to 7, wherein the at least one hole and the mounting inserted into the at least one hole have a substantially identical cross section.

9. The glazing according to one of claims 1 to 8, wherein the mounting comprises a lower part (4) and an upper part (3), the upper part (3) projecting with respect to the lower part (4).

10. The glazing according to claim 9, wherein the upper part (3) of the mounting has a lower face (9), said lower face (9) partially covering the glass sheet (1) or the glazed assembly (12).

11. The glazing according to one of claims 1 to 10, wherein the mounting is secured in the at least one hole by means of adhesive and/or by clamping of the mounting in the at least one hole.

12. The glazing according to one of claims 1 to 11, wherein the mounting comprises an attachment part, the audio exciter being secured to said attachment part.

13. The glazing according to one of claims 1 to 12, being a vehicle glazing, preferably of a motor vehicle.

14. The glazing according to one of claims 1 to 12, being a construction glazing, such as a glazing of a window or a building facade.

15. A method for manufacturing a glazing according to one of claims 1 to 14, comprising the following steps:
- providing a glass sheet (1) or a glazed assembly (12) and at least one audio exciter (2) mounted on a mounting;
- boring at least one hole in the glass sheet (1) or the glazed assembly (12); and
- inserting the mounting into the at least one hole of the glass sheet (1) or of the glazed assembly (12).

16. A method for manufacturing a glazing according to one of claims 1 to 14, comprising the following steps:
- providing a glass sheet (1) or a glazed assembly (12), at least one audio exciter (2) and at least one mounting;
- boring at least one hole in the glass sheet (1) or the glazed assembly (12);
- inserting the at least one mounting into the at least one hole of the glass sheet (1) or of the glazed assembly (12); and
- mounting the at least one audio exciter (2) onto the at least one mounting.
